# EUROPÄISCHE PATENTANMELDUNG

(11) **EP 2 887 167 A1**
(43) Veröffentlichungstag der Anmeldung: **24.06.2015**
(21) Anmeldenummer: 13199045.9
(22) Anmeldetag: 20.12.2013
(51) Int. Cl.: G05B 19/416

(54) **Verfahren zur Steuerung eines Gerätesystems mit einem Werkzeuggerät und einer motorischen Vorschubeinrichtung**

(71) Anmelder: HILTI Aktiengesellschaft, 9494 Schaan (LI)
(72) Erfinder: Drexl, Tobias, 86947 Weil (DE); Pfeiffer, Ralf, 86932 Pürgen Stoffen (DE); Schaer, Roland, 9472 Grabs (CH); Profunser, Dieter, 6835 Zwischenwasser (AT)
(74) Vertreter: Hilti Aktiengesellschaft Corporate Intellectual Property

(57) **Zusammenfassung**

Verfahren zur Steuerung eines Gerätesystems (10) mit einem Werkzeuggerät (12) und einer motorischen Vorschubeinrichtung (25) beim Bearbeiten eines Werkstückes aus einem ersten Material und einem, vom ersten Material verschiedenen, zweiten Material, wobei das Werkstück vom Gerätesystem (10) zunächst in einem ersten Betriebsmodus mit ersten Bearbeitungsparametern bearbeitet wird, die für das erste Material gespeichert sind. Nach Beginn der Bearbeitung des Werkstückes im ersten Betriebsmodus wird ein erster Bearbeitungsfort-schritt gemessen und als Referenzwert gespeichert, während der Bearbeitung im ersten Betriebsmodus wird regelmäßig ein aktueller Bearbeitungsfortschritt gemessen und mit einem voreingestellten ersten Grenzwert verglichen.

## Beschreibung

### Technisches Gebiet

Die vorliegende Erfindung betrifft ein Verfahren zur Steuerung eines Gerätesystems mit einem Werkzeuggerät und einer motorischen Vorschubeinrichtung beim Bearbeiten eines Werkstückes aus einem ersten Material und einem vom ersten Material verschiedenen, zweiten Material gemäß dem Oberbegriff des Anspruchs 1.

### Stand der Technik

Bei der Bearbeitung mit Werkzeuggeräten erfordern verschiedene zu bearbeitende Materialien, wie beispielsweise Beton und Stahl, angepasste Bearbeitungsparameter. Durch die unterschiedlichen Materialeigenschaften von Beton und Eisen unterscheiden sich die an das jeweilige Material angepassten Bearbeitungsparametern stark voneinander. Zu den Bearbeitungsparametern zählen neben einem geeigneten Bearbeitungswerkzeug beispielsweise das Drehmoment und die Drehzahl, mit der das Bearbeitungswerkzeug um eine Drehachse angetrieben wird.

Um die verfügbare Leistung des Werkzeuggerätes auszunutzen und gleichzeitig einen Verschleiß des Bearbeitungswerkzeuges zu reduzieren, ist es bekannt, dass der Bediener die Bearbeitungsparameter des Werkzeuggerätes an das Bearbeitungswerkzeug und das Material des Werkstückes anpasst. Bei Kernbohrgeräten werden beispielsweise die Parameter des Antriebsmotors, vor allem die Leistung und die Drehzahl, in Abhängigkeit vom Durchmesser der Kernbohrkrone eingestellt. Nachteilig ist, dass ein unerfahrener Bediener nicht über die erforderlichen Kenntnisse verfügt, um die Bearbeitungsparameter des Werkzeuggerätes an verschiedene Materialien anzupassen. Außerdem ist häufig nicht bekannt, wo Bewehrungsstäbe angeordnet sind.

Aus EP 1 988 438 A1 ist ein Verfahren zur Steuerung eines Gerätesystems bestehend aus einem Geräteständer, einem Werkzeuggerät und einer motorischen Vorschubeinrichtung sowie ein entsprechendes Gerätesystem zur Durchführung des Verfahrens bekannt. Das Werkzeuggerät umfasst einen Antriebsmotor zum Antrieb eines Bearbeitungswerkzeuges, eine Sensoreinrichtung zur Messung der Motorleistung und eine Kontrolleinheit zur Steuerung des Werkzeuggerätes. Die motorische Vorschubeinrichtung umfasst unter anderem einen Vorschubmotor und eine Kontrolleinheit zur Steuerung der motorischen Vorschubeinrichtung. Das bekannte Steuerungsverfahren hat den Nachteil, dass die Steuerung des gesamten Gerätesystems ausschließlich auf Grundlage der Motorleistung oder einem von der Motorleistung funktional abhängigen Messwert erfolgt. Aus der Motorleistung wird die Vorschubgeschwindigkeit bestimmt. Die Motorleistung und die daraus bestimmte Vorschubgeschwindigkeit dienen zur Schätzung der Werkzeugparameter (Bohrkronendurchmesser) und Werkstückparameter (Höhe des Werkstückes; Beton oder Eisen). Auf Grundlage der geschätzten Werkzeug- und Werkstückparameter werden unter Verwendung von Look-Up-Tabellen, die Know-how über das Bearbeitungsverfahren enthalten, Sollwerte für die Drehzahl und die Motorleistung des Antriebsmotors ermittelt.

### Darstellung der Erfindung

Die Aufgabe der vorliegenden Erfindung besteht demgegenüber darin, ein Verfahren zur Steuerung eines Gerätesystems mit einem Werkzeuggerät und einer motorischen Vorschubeinrichtung dahingehend weiterzuentwickeln, dass die Bearbeitungsparameter an die Eigenschaften des zu bearbeitenden Werkstückes angepasst sind und der Bearbeitungsprozess beim Kernbohren weitgehend automatisch ausgeführt wird.

Diese Aufgabe wird bei dem eingangs genannten Verfahren zur Steuerung eines Gerätesystems mit einem Werkzeuggerät und einer motorischen Vorschubeinrichtung erfindungsgemäß durch die Merkmale des unabhängigen Anspruchs 1 gelöst. Vorteilhafte Ausgestaltungen ergeben sich aus den abhängigen Ansprüchen.

Erfindungsgemäß ist das Verfahren zur Steuerung eines Gerätesystems mit einem Werkzeuggerät und einer motorischen Vorschubeinrichtung beim Bearbeiten eines Werkstückes aus einem ersten Material und einem, vom ersten Material verschiedenen, zweiten Material, dadurch gekennzeichnet, dass:
■ das Werkstück vom Gerätesystem zunächst in einem ersten Betriebsmodus mit ersten Bearbeitungsparametern bearbeitet wird, die für das erste Material gespeichert sind,
■ nach Beginn der Bearbeitung des Werkstückes im ersten Betriebsmodus ein erster Bearbeitungsfortschritt des Werkzeuggerätes gemessen und als Referenzwert gespeichert wird,
■ während der Bearbeitung des Werkstückes im ersten Betriebsmodus regelmäßig ein aktueller Bearbeitungsfortschritt des Werkzeuggerätes gemessen und mit einem ersten Grenzwert verglichen wird.

Die vorliegende Erfindung befasst sich mit der Bearbeitung von Werkstücken, die aus verschiedenen Materialien bestehen. Die Werkstücke weisen mindestens zwei verschiedene Materialien auf, die als erstes und zweites Material bezeichnet werden und sich in ihren Materialeigenschaften voneinander unterscheiden. Dabei wird das, an der Oberfläche des Werkstückes angeordnete Material als erstes Material bezeichnet. Die für das Kernbohren wichtigste Kombination von Materialien ist Beton als erstes Material und Eisen als zweites Material, wobei Eisen in Form von Bewehrungsstäben in den Beton eingebettet ist.

Voraussetzung für das erfindungsgemäße Verfahren ist, dass das Gerätesystem weiß, aus welchen Materialien das zu bearbeitende Werkstück besteht und welches Material sich an der Oberfläche des Werkstückes befindet. Für verschiedene Materialien sind in der Gerätesteuerung des Gerätesystems passende Bearbeitungsparameter gespeichert, erste Bearbeitungsparameter für das erste Material und zweite Bearbeitungsparameter für das zweite Material. Die gespeicherten Bearbeitungsparameter basieren auf einer Vielzahl von Bohrungen und sind in Form von Lookup-Tabellen in der Gerätesteuerung gespeichert. Die in der Gerätesteuerung gespeicherten Bearbeitungsparameter können hinsichtlich verschiedener Randbedingungen optimiert werden; zu den häufig verwendeten Randbedingungen gehören eine hohe Bearbeitungsgeschwindigkeit, ein geringer Werkzeugverschleiß und eine hohe Bearbeitungsqualität.

Um das Gerätesystem mit dem Werkzeuggerät und der motorischen Vorschubeinrichtung automatisch steuern zu können, muss das Gerätesystem erkennen, ob die Bohrkrone das erste Material des Werkstückes oder das zweite Material des Werkstückes bearbeitet. Beim erfindungsgemäßen Steuerungsverfahren wird vorausgesetzt, dass das Werkstück an der Oberfläche aus dem ersten Material besteht. Daher wird das Gerätesystem zunächst in einem ersten Betriebsmodus mit ersten Bearbeitungsparametern bearbeitet, die für das erste Material gespeichert sind. Nach dem Beginn der Bearbeitung im ersten Betriebsmodus wird ein erster Bearbeitungsfortschritt gemessen und als Referenzwert gespeichert. Als Bohrfortschritt ist ein Quotient aus einer Wegdifferenz und einer Zeitdifferenz definiert, der somit eine Geschwindigkeit darstellt. Der Bohrfortschritt kann dadurch berechnet werden, dass am Beginn und am Ende eines festen Zeitintervalls die Positionen der Bohrkrone gemessen werden oder für vorgegebene Positionen der Bohrkrone die benötigte Zeit gemessen wird.

Die Bearbeitung im ersten Betriebsmodus beginnt zu einem Zeitpunkt, bei dem sichergestellt ist, dass das erste Material bearbeitet wird. Die Entscheidung, ob die Bohrkrone das erste Material oder das zweite Material bearbeitet, wird mit Hilfe des Bohrfortschrittes getroffen. Während der Bearbeitung des Werkstückes im ersten Betriebsmodus wird regelmäßig ein aktueller Bearbeitungsfortschritt des Werkzeuggerätes gemessen und mit einem ersten Grenzwert verglichen. Der erste Grenzwert basiert wie die Bearbeitungsparameter auf einer Vielzahl von Bohrungen und ist in der Gerätesteuerung gespeichert. Im ersten Grenzwert sind die unterschiedlichen Materialeigenschaften des ersten und zweiten Materials enthalten.

Das Werkstück wird vom Gerätesystem weiterhin im ersten Betriebsmodus bearbeitet, wenn der aktuelle Bearbeitungsfortschritt innerhalb des ersten Grenzwertes liegt. Da das erste Material nicht homogen ist, sind kleinere Abweichungen des aktuellen Bearbeitungsfortschrittes vom Referenzwert erlaubt. Solange die Abweichungen kleiner als eine erlaubte Abweichung sind, erfolgt die Bearbeitung mit dem Gerätesystem im ersten Betriebsmodus.

Das Gerätesystem wird aus dem ersten Betriebsmodus in einen zweiten Betriebsmodus umgeschaltet, wenn der aktuelle Bearbeitungsfortschritt außerhalb des ersten Grenzwertes liegt, wobei das Werkstück vom Gerätesystem im zweiten Betriebsmodus mit zweiten Bearbeitungsparametern bearbeitet wird, die für das zweite Material gespeichert sind. Da sich die Eigenschaften des ersten und zweiten Materials stark voneinander unterscheiden, kommt es zu einer drastischen Änderung des aktuellen Bearbeitungsfortschrittes, wenn die Bohrkrone das zweite Material bearbeitet. Diese Änderung des aktuellen Bearbeitungsfortschrittes wird zum Umschalten aus dem ersten Betriebsmodus in den zweiten Betriebsmodus genutzt.

In einer ersten Variante ist der erste Grenzwert kleiner als der Referenzwert. Das Werkstück wird solange im ersten Betriebsmodus bearbeitet, wie der aktuelle Bearbeitungsfortschritt den ersten Grenzwert nicht unterschreitet. Wenn der aktuelle Bearbeitungsfortschritt den ersten Grenzwert unterschreitet, wird das Gerätesystem aus dem ersten Betriebsmodus in den zweiten Betriebsmodus umgeschaltet.

In einer zweiten Variante ist der erste Grenzwert grösser als der Referenzwert. Das Werkstück wird solange im ersten Betriebsmodus bearbeitet, wie der aktuelle Bearbeitungsfortschritt den ersten Grenzwert nicht überschreitet. Wenn der aktuelle Bearbeitungsfortschritt den ersten Grenzwert überschreitet, wird das Gerätesystem aus dem ersten Betriebsmodus in den zweiten Betriebsmodus umgeschaltet.

Während der Bearbeitung des Werkstückes im zweiten Betriebsmodus wird regelmäßig der aktuelle Bearbeitungsfortschritt des Werkzeuggerätes gemessen und mit einem zweiten Grenzwert verglichen. Der zweite Grenzwert basiert wie die Bearbeitungsparameter und der erste Grenzwert auf einer Vielzahl von Bohrungen und ist in der Gerätesteuerung gespeichert.

Das Werkstück wird vom Gerätesystem weiterhin im zweiten Betriebsmodus bearbeitet, wenn der aktuelle Bearbeitungsfortschritt innerhalb des zweiten Grenzwertes liegt. Da das zweite Material nicht homogen ist, sind kleinere Abweichungen des aktuellen Bearbeitungsfortschrittes erlaubt. Solange die Abweichungen kleiner als eine erlaubte Abweichung sind, erfolgt die Bearbeitung mit dem Gerätesystem im zweiten Betriebsmodus.

Das Gerätesystem wird aus dem zweiten Betriebsmodus in den ersten Betriebsmodus umgeschaltet, wenn der aktuelle Bearbeitungsfortschritt außerhalb des zweiten Grenzwertes liegt, wobei das Werkstück vom Gerätesystem im ersten Betriebsmodus mit den ersten Bearbeitungsparametern bearbeitet wird, die für das erste Material gespeichert sind.

In der ersten Variante, in der der erste Grenzwert kleiner als der Referenzwert ist, ist der zweite Grenzwert grösser als der erste Grenzwert. Das Werkstück wird vom Gerätesystem solange im zweiten Betriebsmodus bearbeitet, wie der aktuelle Bearbeitungsfortschritt den zweiten Grenzwert nicht überschreitet. Das Gerätesystem wird aus dem zweiten Betriebsmodus in den ersten Betriebsmodus umgeschaltet, wenn der aktuelle Bearbeitungsfortschritt den zweiten Grenzwert überschreitet.

In der zweiten Variante, in der der erste Grenzwert grösser als der Referenzwert ist, ist der zweite Grenzwert kleiner als der erste Grenzwert. Das Werkstück wird vom Gerätesystem weiterhin im zweiten Betriebsmodus bearbeitet, wenn der aktuelle Bearbeitungsfortschritt den zweiten Grenzwert nicht unterschreitet. Das Gerätesystem wird aus dem zweiten Betriebsmodus in den ersten Betriebsmodus umgeschaltet, wenn der aktuelle Bearbeitungsfortschritt den zweiten Grenzwert unterschreitet.

Das erfindungsgemäße Verfahren lässt sich auf Werkstücke mit mehr als zwei Materialien anwenden. Voraussetzung ist, dass für jedes Material geeignete Bearbeitungsparameter gespeichert sind und entsprechende Grenzwerte, die den Übergang zwischen zwei Materialien darstellen, vorliegen.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: ein Gerätesystem mit einem Geräteständer, einem Kernbohrgerät und einer motorischen Vorschubeinrichtung zum Verschieben des Kernbohrgerätes entlang des Geräteständers in einer dreidimensionalen Darstellung;
- FIG. 2: die motorische Vorschubeinrichtung und eine Antriebseinrichtung des Kernbohrgerätes der FIG. 1 in einer schematischen Darstellung;
- FIG. 3: die Anwendung des Gerätesystems der FIG. 1 beim Erstellen einer Sacklochbohrung und einer Durchgangsbohrung in einer Betondecke mit eingebetteten Bewehrungsstäben in einer schematischen Darstellung;
- FIG. 4: eine erste Variante eines erfindungsgemäßen Verfahrens zur Steuerung des in FIG. 1 gezeigten Gerätesystems beim Erstellen einer Sacklochbohrung in der Betondecke der FIG. 3 in Form eines Ablaufdiagramms; und
- FIG. 5: eine zweite Variante eines erfindungsgemäßen Verfahrens zur Steuerung des in FIG. 1 gezeigten Gerätesystems beim Erstellen einer Durchgangsbohrung in der Betondecke der FIG. 3 in Form eines Ablaufdiagramms.

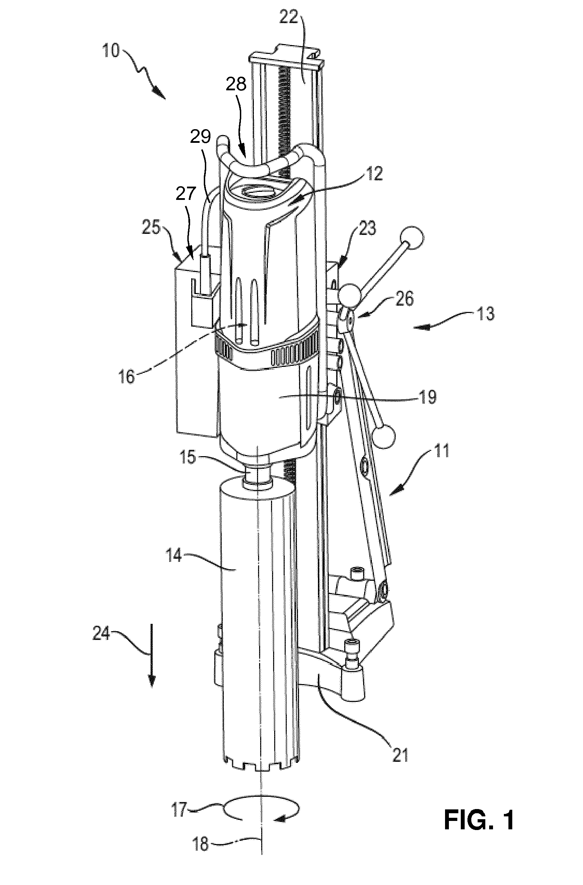

**FIG. 1** zeigt ein ständergeführtes Gerätesystem **10** bestehend aus einem Geräteständer **11**, einem am Geräteständer 11 verschiebbar angeordneten Werkzeuggerät **12** und einer Vorschubvorrichtung **13** zum Verschieben des Werkzeuggerätes 12 entlang des Geräteständers 11 in einer dreidimensionalen Darstellung.

Das Werkzeuggerät ist als Kernbohrgerät 12 ausgebildet und umfasst ein als Bohrkrone **14** ausgebildetes Bearbeitungswerkzeug, das auf einer Antriebswelle **15** angeordnet ist und von einer Antriebseinrichtung **16** in einer Drehrichtung **17** um eine Drehachse **18** angetrieben wird. Unter dem Begriff "Antriebseinrichtung" werden sämtliche Antriebskomponenten für die Bohrkrone 14, mit Ausnahme der Antriebswelle 15, zusammengefasst. Die in FIG. 1 schematisch dargestellte Antriebseinrichtung 16 ist einem Gerätegehäuse **19** angeordnet und umfasst einen Bohrmotor und eine Elektronikeinrichtung. Die Bohrkrone 14 ist drehfest auf der Antriebswelle 15 montiert und die Antriebswelle 15 wird vom Bohrmotor um die Drehachse 18 angetrieben. Zwischen dem Bohrmotor und der Antriebswelle 15 können eine oder mehrere Getriebekomponenten zwischengeschaltet sein.

Der Geräteständer 11 besteht aus einer Grundplatte **21**, die an einem Untergrund befestigt wird, und einer Führungsschiene **22**, die mit der Grundplatte 21 verbunden ist. Das Kernbohrgerät 12 ist über einen Führungsschlitten **23** am Geräteständer 11 angeordnet und mittels der Vorschubvorrichtung 13 entlang der Führungsschiene 22 in einer Vorschubrichtung **24**, die parallel zur Drehachse 18 verläuft, verschiebbar. Die Vorschubvorrichtung 13 umfasst eine motorische Vorschubeinrichtung **25** und eine, als Handrad ausgebildete, manuelle Vorschubeinrichtung **26**. Das Kernbohrgerät 12 kann wahlweise mit der motorischen oder manuellen Vorschubeinrichtung 25, 26 entlang der Führungsschiene 22 des Geräteständers 11 verfahren werden. Die Bedienung des Gerätesystems 10 erfolgt über eine an der motorischen Vorschubeinrichtung 25 angebrachte erste Bedieneinheit **27** und eine am Kernbohrgerät 12 angebrachte zweite Bedieneinheit **28**. Die motorische Vorschubeinrichtung 25 ist über ein Kommunikationskabel **29** mit dem Kernbohrgerät 12 verbunden.

Die erste Bedieneinheit 27 umfasst beispielsweise mehrere Bedientasten, ein Display und einen Not-Aus-Schalter und die zweite Bedieneinheit 28 kann als Drehwahlschalter ausgebildet sein. Alternativ oder zusätzlich kann eine Fernbedienungseinheit vorgesehen sein, die über Kommunikationsverbindungen mit einer Kontrolleinheit des Kernbohrgerätes 12 und/oder einer Kontrolleinheit der motorischen Vorschubeinrichtung 25 verbunden ist. Die Kommunikationsverbindungen können als kabellose Kommunikationsverbindungen in Form von Infrarot-, Bluetooth-, WLAN- oder Wi-Fi-Verbindungen oder als kabelgebundene Kommunikationsverbindungen ausgebildet sein. Neben den aufgeführten kabellosen Verbindungstechnologien eignen sich sämtliche bereits bekannten und zukünftigen kabellosen Verbindungstechnologien zur Datenübertragung.

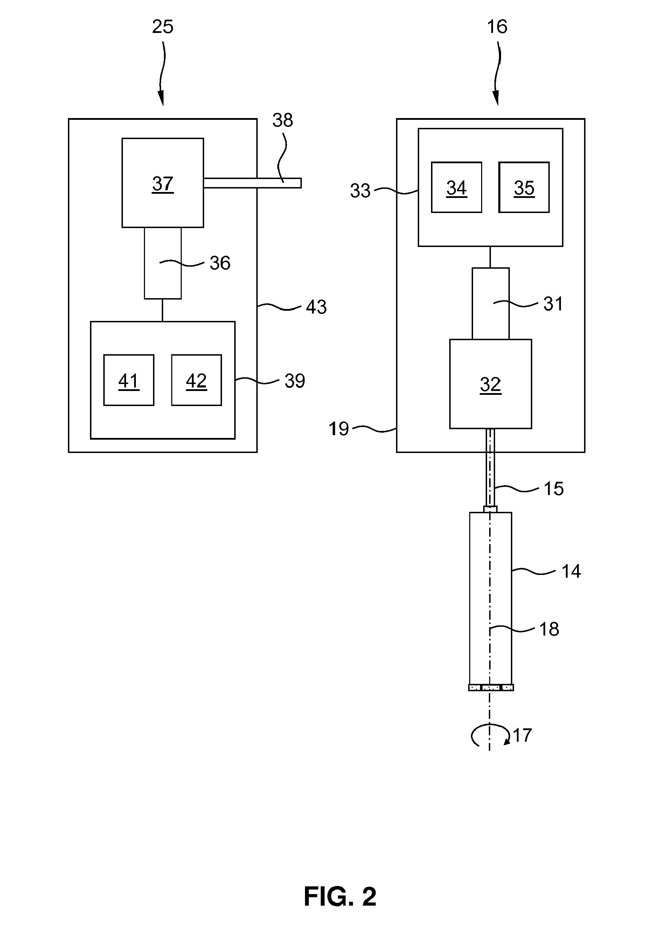

**FIG. 2** zeigt den Aufbau der Antriebseinrichtung 16 und der motorischen Vorschubeinrichtung 25 in einer schematischen Darstellung. Die Bohrkrone 14 ist drehfest auf der Antriebswelle 15 montiert und wird von der Antriebseinrichtung 16 um die Drehachse 18 angetrieben. Die motorische Vorschubeinrichtung 25 verfährt das Kernbohrgerät 12 in der Vorschubrichtung 24 entlang der Führungsschiene 22.

Die Antriebseinrichtung 16 umfasst einen Bohrmotor **31**, eine Getriebeeinrichtung **32** und eine Elektronikeinrichtung **33** mit einer Leistungselektronikeinheit **34** und einer Kontrolleinheit **35** zur Steuerung und Regelung des Kernbohrgerätes 12. Die Antriebswelle 15 wird vom Bohrmotor 31 und der Getriebeeinrichtung 32 um die Drehachse 18 angetrieben, wobei die Getriebeeinrichtung 32 zwischen dem Bohrmotor 31 und der Antriebswelle 15 angeordnet ist. Der Bohrmotor 31, die Getriebeeinrichtung 32 und die Elektronikeinrichtung 33 sind im Gerätegehäuse 19 des Kernbohrgerätes 12 angeordnet.

Die motorische Vorschubeinrichtung 25 umfasst einen Vorschubmotor **36**, eine Getriebeeinrichtung **37**, eine Antriebswelle **38** und eine Elektronikeinrichtung **39** mit einer Leistungselektronikeinheit **41** und einer Kontrolleinheit **42** zur Steuerung und Regelung der motorischen Vorschubeinrichtung 25. Der Vorschubmotor 36, die Getriebeeinrichtung 37 und die Elektronikeinrichtung 39 sind in einem Gehäuse **43** angeordnet. In die Oberseite des Gehäuses 43 ist die erste Bedieneinheit 27 integriert.

Die Steuerung und Regelung des Kernbohrprozesses erfolgt mittels der Kontrolleinheiten 35, 42. Ziel der Steuerungs- und Regelungsprozesse beim Kernbohren ist es, die verfügbare Leistung des Gerätesystems 10 optimal zu nutzen und gleichzeitig die Lebensdauer der Bohrkrone 14 und der Antriebseinrichtung 16 nicht zu reduzieren. Außerdem sollen unerfahrene Benutzer in die Lage versetzt werden, optimale Bearbeitungsergebnisse (Qualität, Zeit, etc.) zu erzielen. Die Bearbeitungs- und Regelungsparameter, mit denen optimale Bearbeitungsergebnisse erzielt werden, hängen vor allem vom Durchmesser der Bohrkrone 14 und vom zu bearbeitenden Material ab. Als Materialien sind für das Kernbohren besonders Beton und Stahl in Form von Armierungseisen relevant. Außerdem erfordert das Anbohren angepasste Bearbeitungs- und Regelungsparameter.

In der Kontrolleinheit 42 der motorischen Vorschubeinrichtung 25 sind Lookup-Tabellen hinterlegt, die optimierte Bearbeitungs- und Regelungsparameter für das Kernbohren enthalten. Für jeden Bohrkronendurchmesser sind mehrere Parametersätze hinterlegt. Die Parametersätze enthalten das Know-how über den Bearbeitungsprozess und berücksichtigen die verschiedenen Randbedingungen beim Anbohren, beim Bohren von Beton (Betonbohren) und beim Bohren von Armierungseisen (Eisenbohren). Für den Fall, dass weitere Materialien bearbeitet werden sollen, können in den Lookup-Tabellen entsprechende Parametersätze mit optimierten Bearbeitungs- und Regelungsparameter für die weiteren Materialien gespeichert werden.

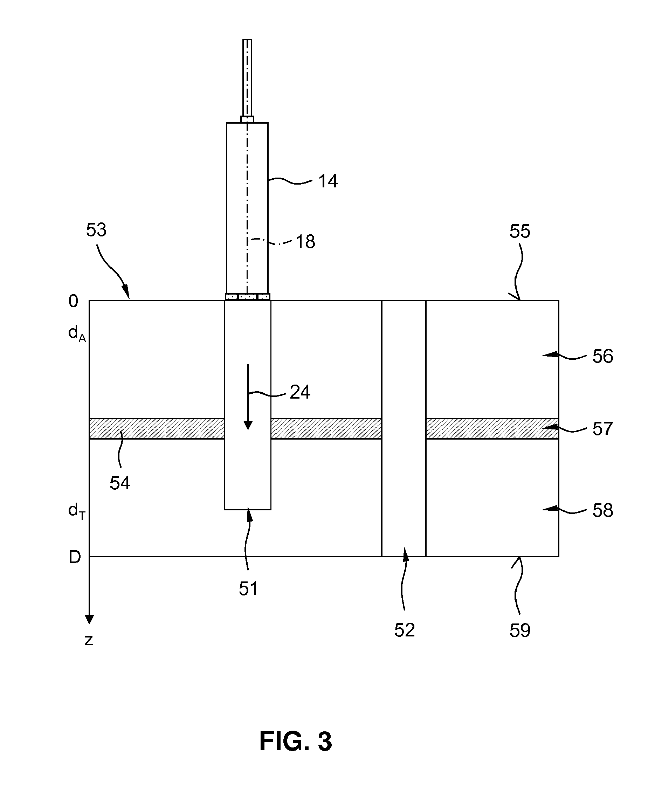

**FIG. 3** zeigt die Anwendung des Gerätesystems 10 der FIG. 1 beim Erstellen einer Sacklochbohrung **51** und einer Durchgangsbohrung **52** in einer Stahlbetondecke **53**, in die Bewehrungsstäbe **54** eingebettet sind. Die Stahlbetondecke 53 besteht im Ausführungsbeispiel der FIG. 3 in einer **z**-Richtung, die der Vorschubrichtung 24 entspricht, aus einer Oberfläche **55**, einem ersten Betonbereich **56**, einem Eisenbereich **57**, einem zweiten Betonbereich **58** und einer Unterseite **59**. Die Sacklochbohrung 51 weist eine Bohrlochtiefe d_{T} auf und die Bohrlochtiefe der Durchgangsbohrung 52 entspricht der Dicke **D** der Stahlbetondecke 53. Die Oberseite 55 der Stahlbetondecke 53 ist als Nullposition z = 0 definiert und sämtliche Tiefenmessungen in z-Richtung beziehen sich auf die Oberseite 55 als Nullposition.

Das Verfahren zur Steuerung des Gerätesystems 10 beim Erstellen der Durchgangsbohrung 52 in der Stahlbetondecke 53 lässt sich in sechs Phasen unterteilen: Detektion der Oberfläche 55, Anbohren, Betonbohren des ersten Betonbereichs 56, Eisenbohren des Eisenbereichs 57, Betonbohren des zweiten Betonbereichs 58 und Durchbrechen an der Unterseite 59. Bei der Sacklochbohrung 51, die im Ausführungsbeispiel der FIG. 3 im zweiten Betonbereich 58 endet, werden die erste bis fünfte Phase analog zur Durchgangsbohrung 52 durchgeführt, wobei die fünfte Phase endet, wenn die Bohrlochtiefe d_{T} erreicht ist; die sechste Phase entfällt. Wenn die Sacklochbohrung 51 bereits im ersten Betonbereich 56 endet, weist das Steuerungsverfahren nur die erste bis dritte Phase auf.

Die erste Phase wird als Oberflächendetektion bezeichnet. Dabei können eine manuelle Variante und eine automatische Variante der Oberflächendetektion unterschieden werden. In der manuellen Variante wird das Kernbohrgerät 12 mit Hilfe des Handrades 26 vom Bediener in die Position verfahren, in der die Bohrkrone 14 auf die Oberfläche 55 der Stahlbetondecke 53 auftrifft, der Bediener bestätigt über die Bedieneinheit 27 an der motorischen Vorschubeinrichtung 25, dass die Bohrkrone 14 die Oberfläche 55 der Stahlbetondecke 53 berührt, und die Kontrolleinheit 42 speichert diese Position der Bohrkrone 14 als Nullposition z = 0.

In der automatischen Variante kann das Erreichen der Oberfläche 55 beispielsweise mit Hilfe der Vorschubgeschwindigkeit der Bohrkrone 14 detektiert werden. Am Vorschubmotor 36 ist eine konstante Drehzahl eingestellt, die über den Führungsschlitten 23 in eine konstante Vorschubgeschwindigkeit der Bohrkrone 14, die als Soll-Geschwindigkeit **v**ₛₒₗₗ bezeichnet wird, umgewandelt wird. Wenn die Bohrkrone 14 auf die Oberfläche 54 auftrifft, wird die Bohrkrone 14 abgebremst und es kommt zu einem rapiden Abfall der Vorschubgeschwindigkeit. Die aktuelle Vorschubgeschwindigkeit **v**ᵢₛₜ der Bohrkrone 14 kann mit Hilfe einer Sensoreinrichtung erfasst werden. Die Differenz zwischen der aktuellen Vorschubgeschwindigkeit vᵢₛₜ der Bohrkrone 14 und der Soll-Geschwindigkeit vₛₒₗₗ wird berechnet und mit einem voreingestellten Wert verglichen. Überschreitet die Differenz den voreingestellten Wert, wird die Position der Bohrkrone 14 in der Kontrolleinheit 42 als Nullposition z = 0 gespeichert.

Sobald die Nullposition der Bohrkrone 14 gespeichert ist, ist die erste Phase beendet und die zweite Phase beginnt. Die zweite Phase wird als Anbohren bezeichnet. Um ein Polieren der Bohrkrone 14 zu verhindern, wird beim Kernbohren zunächst mit einer reduzierten Motorleistung und Vorschubgeschwindigkeit gearbeitet. Wenn die Schneidsegmente der Bohrkrone 14 die Oberfläche 55 durchbrochen haben und im ersten Betonbereich 56 angeordnet sind, ist die Bohrkrone 14 geführt und das Polieren der Bohrkrone 14 verhindert. Um das Polieren sicher zu verhindern, wird die zweite Phase des Anbohrens über eine Anbohrtiefe d_{A} durchgeführt.

Die Bearbeitungsparameter für den Gerätemodus "Anbohren" sind gegenüber dem Gerätemodus "Betonbohren" reduziert. Die Anbohrtiefe d_{A} und die für das Anbohren geeigneten Bearbeitungsparameter sind in der Kontrolleinheit 42 gespeichert. In der Praxis hat sich eine Anbohrtiefe d_{A} von 2 mm als geeignet erwiesen. Grundsätzlich gilt, dass die Anbohrtiefe d_{A} so gewählt sein sollte, dass die Phase des Anbohrens in der Tiefe der Bewehrungsstäbe 54 beendet ist. Bei der manuellen Oberflächendetektion muss die zweite Phase manuell vom Bediener gestartet werden, wohingegen die zweite Phase bei der automatischen Oberflächendetektion auch automatisch vom Gerätesystem 10 gestartet werden kann.

Sobald die Bohrkrone 14 die Anbohrtiefe d_{A} erreicht hat, ist die zweite Phase des Anbohrens beendet und die dritte Phase beginnt. Die dritte Phase wird als Betonbohren des ersten Betonbereichs 56 bezeichnet. Das Gerätesystem 10 wird aus dem Gerätemodus "Anbohren" in den Gerätemodus "Betonbohren" umgeschaltet. Die Bearbeitungsparameter für das Kernbohrgerät 12 und die motorische Vorschubeinrichtung 25 sind an das Bohren von Beton angepasst. Die Bewehrungsstäbe 54 sind mindestens 40 mm unterhalb der Oberfläche 55 der Stahlbetondecke 53 angeordnet und die Anbohrtiefe d_{A} ist kleiner als der Abstand der Oberfläche 55 zu den Bewehrungsstäben 54, so dass nach dem Anbohren grundsätzlich die Phase Betonbohren folgt.

Sobald die Bohrkrone 14 auf einen Bewehrungsstab 54 trifft, ist die dritte Phase beendet und die vierte Phase beginnt. Die vierte Phase wird als Eisenbohren des Eisenbereichs 57 bezeichnet. Das Gerätesystem 10 wird aus dem Gerätemodus "Betonbohren" in den Gerätemodus "Eisenbohren" umgeschaltet. Die Bearbeitungsparameter für das Kernbohrgerät 12 und die motorische Vorschubeinrichtung 25 sind an das Bohren von Armierungseisen angepasst.

Sobald die Bohrkrone 14 auf den zweiten Betonbereich 58 trifft, ist die vierte Phase beendet und die fünfte Phase beginnt. Die fünfte Phase wird als Betonbohren des zweiten Betonbereichs 58 bezeichnet. Das Gerätesystem 10 wird aus dem Gerätemodus "Eisenbohren" in den Gerätemodus "Betonbohren" umgeschaltet. Die Bearbeitungsparameter für das Kernbohrgerät 12 und die motorische Vorschubeinrichtung 25 entsprechen den Bearbeitungsparametern der dritten Phase.

Wenn die Bohrkrone 14 den zweiten Betonbereich 58 durchbohrt hat, ist die fünfte Phase beendet und die sechste und letzte Phase des erfindungsgemäßen Steuerungsverfahrens beginnt. Die sechste Phase wird als Durchbrechen an der Unterseite 59 bezeichnet. Die Durchgangsbohrung 52 ist in der Stahlbetondecke 53 erstellt, wenn die Bohrkrone 14 die Unterseite der Stahlbetondecke 53 erreicht hat.

Um das Gerätesystem 10 mit dem Kernbohrgerät 12 und der motorischen Vorschubeinrichtung 25 automatisch steuern zu können, muss das Gerätesystem 10 erkennen, ob die Bohrkrone 10 Beton bohrt oder einen Bewehrungsstab 54 bearbeitet. Die Entscheidung, ob die Bohrkrone 14 in einem Betonbereich 56, 58 bohrt oder im Eisenbereich 57 auf einen Bewehrungsstab 54 trifft, wird bei dem erfindungsgemäßen Verfahren zur Steuerung des Gerätesystems 10 mit Hilfe eines Bohrfortschrittes **v** getroffen. Als Bohrfortschritt v ist ein Quotient aus einer Wegdifferenz Δ**z** und einer Zeitdifferenz Δ**t** definiert, der somit eine Geschwindigkeit darstellt. Der Bohrfortschritt v kann dadurch berechnet werden, dass am Beginn und am Ende eines festen Zeitintervalls Δt die Positionen z₁, z₂ der Bohrkrone 14 gemessen werden. Alternativ kann für vorgegebene Positionen z₁, z₂ mit Δz = z₂ - z₁ der Bohrkrone 14 die benötigte Zeit Δt = t₂ - t₁ gemessen werden.

Nach dem Umschalten des Gerätesystems 10 aus der zweiten in die dritte Phase wird im Rahmen des Steuerungsverfahrens ein erster Bohrfortschritt berechnet, der als Referenzwert **v**_{ref} für das Betonbohren definiert wird. Alle weiteren Bohrfortschritte, die während des Verfahrens berechnet werden, werden mit dem Referenzwert v_{ref} verglichen. Da die Anbohrtiefe d_{A} so gewählt wurde, dass die Phase des Anbohrens in der Tiefe der Bewehrungsstäbe 54 auf jeden Fall beendet ist, ist sichergestellt, dass nach dem Anbohren Beton bearbeitet wird.

Solange die Bohrkrone 14 den ersten Betonbereich 56 bearbeitet, sind die Abweichungen des Bohrfortschrittes vₐₖₜ zum Referenzwert v_{ref} kleiner als ca. ± 20 % * v_{ref}. Die Abweichungen vom Referenzwert v_{ref} entstehen unter anderem durch Unregelmäßigkeiten im Beton. Sobald die Bohrkrone 14 nicht mehr im ersten Betonbereich 56 bohrt, sondern im Eisenbereich 57 auf den Bewehrungsstab 54 trifft, kommt es zu einem deutlichen Abfall des aktuellen Bohrfortschrittes vₐₖₜ. Diese drastische Änderung des Bohrfortschrittes wird zum Umschalten in die vierte Phase, das Eisenbohren des Eisenbereiches 57, genutzt. Dazu wird der aktuelle Bohrfortschritt vₐₖₜ bestimmt und mit einem voreingestellten, ersten Grenzwert **G**₁ verglichen. Der erste Grenzwert G₁ entspricht einem prozentualen Anteil des Referenzwertes v_{ref} und liegt beispielsweise bei 40 % des Referenzwerts v_{ref}. Die Bohrkrone 14 bearbeitet Beton, solange der aktuelle Bohrfortschritt vₐₖₜ den ersten Grenzwert G₁ nicht unterschreitet (vₐₖₜ ≥ G₁). Unterschreitet der aktuelle Bohrfortschritt vₐₖₜ den ersten Grenzwert G₁(vₐₖₜ < G₁), wird kein Beton bearbeitet, sondern das zweite, vom Beton verschiedene Material, im Ausführungsbeispiel der FIG. 3 das Eisen der Bewehrungsstäbe 54.

In der Phase "Eisenbohren" sind die Bearbeitungsparameter des Gerätesystems 10 an das Bohren des Bewehrungsstabes 54 angepasst. Sobald die Bohrkrone 14 nicht mehr den Bewehrungsstab 54 bearbeitet, sondern den Beton im zweiten Betonbereich 58 bearbeitet, kommt es zu einem deutlichen Anstieg des aktuellen Bohrfortschrittes vₐₖₜ. Diese drastische Änderung des Bohrfortschrittes wird zum Umschalten in die fünfte Phase genutzt, das Betonbohren des zweiten Betonbereiches 58. Dazu wird der aktuelle Bohrfortschritt vₐₖₜ bestimmt und mit einem voreingestellten, zweiten Grenzwert **G**₂ verglichen. Der zweite Grenzwert G₂ entspricht einem prozentualen Anteil des Referenzwertes v_{ref} und liegt beispielsweise bei 60 % des Referenzwerts v_{ref}. Die Bohrkrone 14 bearbeitet den Eisenbereich 57, solange der aktuelle Bohrfortschritt vₐₖₜ den zweiten Grenzwert G₂ unterschreitet (vₐₖₜ < G₂). Überschreitet der aktuelle Bohrfortschritt vₐₖₜ den zweiten Grenzwert G₂, (vₐₖₜ ≥ G₂), hat die Bohrkrone 14 den Eisenbereich 57 verlassen und bearbeitet den zweiten Betonbereich 58. Der erste und zweite Grenzwert G₁, G₂ werden vom Bediener vor Beginn des Kernbohrprozesses festgelegt oder sind in den Lookup-Tabellen der Kontrolleinheit 42 gespeichert.

Das Ende der Kernbohrung kann bei der Durchgangsbohrung 52 ebenfalls mit Hilfe des aktuellen Bohrfortschrittes vₐₖₜ und des Referenzwertes v_{ref} überwacht werden. Wenn die Bohrkrone 14 den zweiten Betonbereich 58 vollständig durchbohrt hat, kommt es an der Unterseite 59 der Stahlbetondecke 53 zu einem Durchbrechen. Die Bohrkrone 14 erfährt keinen Widerstand und es kommt zu einem drastischen Anstieg des aktuellen Bohrfortschrittes vₐₖₜ. Diese drastische Änderung des Bohrfortschrittes kann zum Abschalten des Gerätesystems 10 genutzt werden. Dazu wird der aktuelle Bohrfortschritt vₐₖₜ mit einem voreingestellten, dritten Grenzwert **G**₃ verglichen. Der dritte Grenzwert G₃ entspricht einem prozentualen Anteil des Referenzwertes v_{ref} und liegt beispielsweise bei 250 % des Referenzwertes v_{ref}. Eine Zunahme des Bohrfortschrittes über 150 % des Referenzwerts v_{ref} kann nur auftreten, wenn die Stahlbetondecke 53 an der Unterseite 59 durchbrochen wurde.

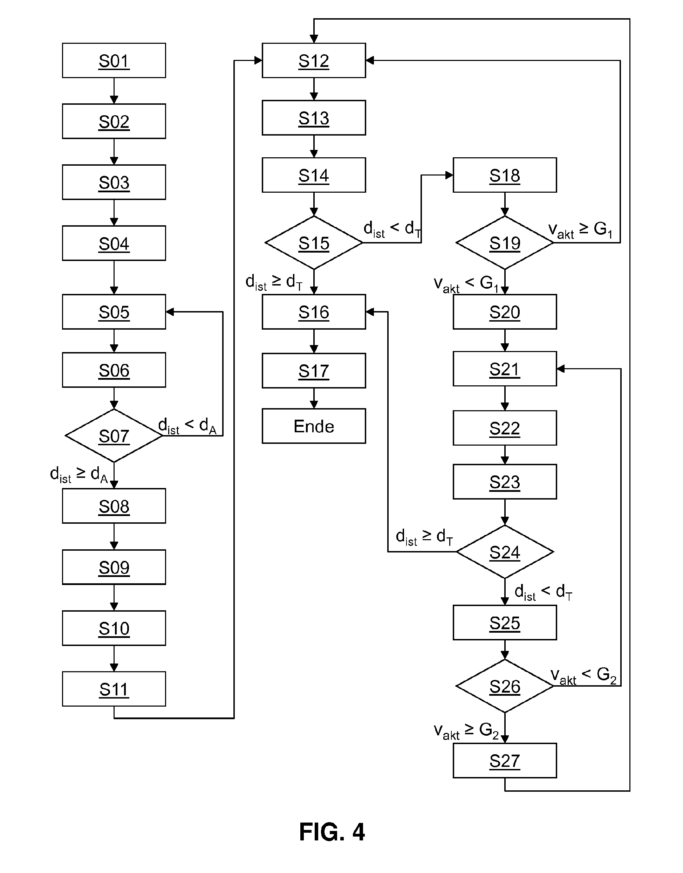

**FIG. 4** zeigt eine erste Variante eines erfindungsgemäßen Verfahrens zur Steuerung eines Gerätesystems beim Erstellen einer Sacklochbohrung in Form eines Ablaufdiagramms. Das Steuerungsverfahren wird anhand des in FIG. 1 gezeigten Gerätesystems 10 mit dem Kernbohrgerät 12 und der motorischen Vorschubeinrichtung 25 beschrieben. Mit Hilfe des Gerätesystems 10 wird die Sacklochbohrung 51 in der Stahlbetondecke 53 der FIG. 3 erstellt.

Der Bediener stellt in einem Schritt **S01** über den Drehwahlschalter 28 den Durchmesser der Bohrkrone 14 und über die erste Bedieneinheit 27 die Geometrie des Bohrlochs (Sacklochbohrung 51 mit der Bohrlochtiefe d_{T}) ein. Alternativ kann der Durchmesser der Bohrkrone 14 ebenfalls über die erste Bedieneinheit 27 eingegeben werden. In einem Schritt **S02** verfährt der Bediener die Bohrkrone 14 in die Nullposition und speichert die Nullposition an der ersten Bedieneinheit 27. Anschließend startet der Bediener das Verfahren in einem Schritt **S03** über die erste Bedieneinheit 27.

Die Kontrolleinheit 42 stellt in einem Schritt **S04** am Vorschubmotor 36 und über die Kontrolleinheit 35 am Bohrmotor 31 die Bearbeitungsparameter ein, die in den Lookup-Tabellen für das Anbohren (zweite Phase) gespeichert sind. Für jeden Bohrkronendurchmesser sind in der Kontrolleinheit 42 mehrere Parametersätze mit geeigneten Bearbeitungsparametern für das Anbohren, das Bohren von Beton (Betonbohren) und das Bohren von Armierungseisen (Eisenbohren) gespeichert. Vor Beginn des Verfahrens sind der Bohrmotor 31 und der Vorschubmotor 36 ausgeschaltet. Das Kernbohrgerät 12 und die motorische Vorschubeinrichtung 25 werden in einem Schritt **S05** eingeschaltet und mit den in Schritt S04 eingestellten Bearbeitungsparametern für das Anbohren betrieben.

Die Kontrolleinheit 42 misst in einem Schritt **S06** mittels einer geeigneten Sensoreinheit die aktuelle Bohrtiefe **d**ᵢₛₜ und prüft in einem Schritt **S07**, ob die voreingestellte Anbohrtiefe d_{A} erreicht ist. Die Messung der aktuellen Bohrtiefe dᵢₛₜ erfolgt in einem vorgegebenen Zeitintervall. Unterschreitet die aktuelle Bohrtiefe die voreingestellte Anbohrtiefe (dᵢₛₜ < d_{A} in S07), wird das Verfahren mit Schritt S05 fortgesetzt. Ist die voreingestellte Anbohrtiefe d_{A} erreicht (dᵢₛₜ ≥ d_{A} in S07), ist die Phase des Anbohrens beendet. Die Schritte S04 bis S07 werden als Anbohrphase **T**₁ bezeichnet.

Wenn die Anbohrphase T₁ beendet ist, stellt die Kontrolleinheit 42 in einem Schritt **S08** am Vorschubmotor 36 und über die Kontrolleinheit 35 am Bohrmotor 31 Bearbeitungsparameter ein, die in den Lookup-Tabellen der Kontrolleinheit 42 für den Bohrkronendurchmesser zum Betonbohren gespeichert sind. Das Kernbohrgerät 12 und die motorische Vorschubeinrichtung 25 werden in einem Schritt **S09** mit den eingestellten Bearbeitungsparametern für das Betonbohren betrieben.

In einem Schritt **S10** wird die Position z der Bohrkrone 14 in einem vorgegebenen Zeitintervall von einem Wegsensor oder einem vergleichbaren Sensor gemessen und an die Kontrolleinheit 42 übermittelt. Die Kontrolleinheit 42 berechnet in einem Schritt **S11** aus den Messwerten den ersten Bohrfortschritt und speichert den ersten Bohrfortschritt als Referenzwert v_{ref}. Das Kernbohrgerät 12 und die motorische Vorschubeinrichtung 25 werden in einem Schritt **S12** mit den Bearbeitungsparametern für das Betonbohren betrieben. Die aktuelle Position der Bohrkrone 14 wird in einem Schritt **S13** gemessen und an die Kontrolleinheit 42 der motorischen Vorschubeinrichtung 25 übermittelt.

Die Kontrolleinheit 42 berechnet in einem Schritt **S14** aus der Position der Bohrkrone 14 die aktuelle Bohrtiefe dᵢₛₜ und vergleicht die aktuelle Bohrtiefe dᵢₛₜ in einem Schritt **S15** mit der eingestellten Bohrlochtiefe d_{T} der Sacklochbohrung 51. Ist die voreingestellte Bohrlochtiefe d_{T} erreicht (dᵢₛₜ ≥ d_{T} in S15), ist die Kernbohrung beendet. Anschließend muss die Bohrkrone 14 aus der Stahlbetondecke 53 entfernt werden, wobei dieser Schritt manuell vom Bediener oder automatisch vom Gerätesystem 10 ausgeführt werden kann. In der automatischen Variante schaltet die Kontrolleinheit 42 das Kernbohrgerät 12 und die motorische Vorschubeinrichtung 25 in einem Schritt **S16** in einen Parkmodus um. In der Kontrolleinheit 42 sind für den Parkmodus passende Bearbeitungsparameter für das Kernbohrgerät 12 und die motorische Vorschubeinrichtung 25 gespeichert. Das Kernbohrgerät 12 und die motorische Vorschubeinrichtung 25 werden in einem Schritt **S17** mit den eingestellten Bearbeitungsparametern betrieben, bis das Kernbohrgerät 12 eine voreingestellte Parkposition erreicht hat. Die Parkposition kann beispielsweise definiert sein als Nullposition mit einem zusätzlichen Versatz von 10 cm oberhalb der Oberfläche 55. Das erfindungsgemäße Verfahren ist nach Schritt S17 beendet.

Unterschreitet die aktuelle Bohrtiefe dᵢₛₜ die voreingestellte Bohrlochtiefe d_{T} (dᵢₛₜ < d_{T} in S15), wird die Kernbohrung fortgesetzt. Die Kontrolleinheit 42 berechnet in einem Schritt **S18** aus den, in Schritt S13 übermittelten, Messwerten den aktuellen Bohrfortschritt vₐₖₜ und vergleicht den aktuellen Bohrfortschritt vₐₖₜ in einem Schritt **S19** mit dem voreingestellten, ersten Grenzwert G₁. Unterschreitet der aktuelle Bohrfortschritt vₐₖₜ den ersten Grenzwert G₁ nicht (vₐₖₜ ≥ G₁ in S19), werden das Kernbohrgerät 12 und die motorische Vorschubeinrichtung 25 weiterhin in der Phase "Betonbohren" betrieben und das erfindungsgemäße Verfahren wird mit Schritt S12 fortgesetzt. Die aktuelle Position der Bohrkrone 14 wird mit einer Frequenz gemessen.

Unterschreitet der aktuelle Bohrfortschritt vₐₖₜ den ersten Grenzwert G₁ (vₐₖₜ < G₁ in S19), schaltet die Kontrolleinheit 42 in einem Schritt **S20** den Vorschubmotor 36 und über die Kontrolleinheit 35 den Bohrmotor 31 aus der Phase "Betonbohren" in die Phase "Eisenbohren" um. Dazu stellt die Kontrolleinheit 42 am Vorschubmotor 36 und am Bohrmotor 31 die Bearbeitungsparameter ein, die in den Lookup-Tabellen der Kontrolleinheit 42 für die Phase "Eisenbohren" gespeichert sind. Das Kernbohrgerät 12 und die motorische Vorschubeinrichtung 25 werden in einem Schritt **S21** mit den eingestellten Bearbeitungsparametern für das Eisenbohren betrieben.

Die aktuelle Position z der Bohrkrone 14 wird in einem Schritt **S22** im Abstand des Zeitintervalls Δt gemessen und an die Kontrolleinheit 42 der motorischen Vorschubeinrichtung 25 übermittelt. Die Kontrolleinheit 42 berechnet in einem Schritt **S23** aus der aktuellen Position der Bohrkrone 14 die aktuelle Bohrtiefe dᵢₛₜ und vergleicht die aktuelle Bohrtiefe dᵢₛₜ in einem Schritt **S24** mit der Bohrlochtiefe d_{T}. Ist die voreingestellte Bohrlochtiefe d_{T} erreicht (dᵢₛₜ ≥ d_{T} in S24), ist die Kernbohrung beendet und das Verfahren wird mit Schritt S16 fortgesetzt. Unterschreitet die aktuelle Bohrtiefe dᵢₛₜ die voreingestellte Bohrlochtiefe d_{T} (dᵢₛₜ < d_{T} in S24), wird die Kernbohrung fortgesetzt und die Kontrolleinheit 42 berechnet in einem Schritt **S25** aus den Messwerten den aktuellen Bohrfortschritt Vₐₖₜ.

In einem Schritt **S26** wird der aktuelle Bohrfortschritt vₐₖₜ mit dem voreingestellten, zweiten Grenzwert G₂ verglichen. Unterschreitet der aktuelle Bohrfortschritt vₐₖₜ den zweiten Grenzwert G₂ (vₐₖₜ < G₂ in S26), werden das Kernbohrgerät 12 und das Vorschubmodul 26 weiterhin in der Phase "Eisenbohren" betrieben und das Verfahren wird mit Schritt S21 fortgesetzt. Unterschreitet der aktuelle Bohrfortschritt vₐₖₜ den zweiten Grenzwert G₂ nicht (vₐₖₜ ≥ G₂ in S26), schaltet die Kontrolleinheit 42 in einem Schritt **S27** aus der Phase "Eisenbohren" in die Phase "Betonbohren" um. Das Kernbohrgerät 12 und die motorische Vorschubeinrichtung 25 werden mit den Bearbeitungsparametern betrieben, die in den Lookup-Tabellen der Kontrolleinheit 42 für die Phase "Betonbohren" gespeichert sind. Das Verfahren wird mit Schritt S12 fortgesetzt.

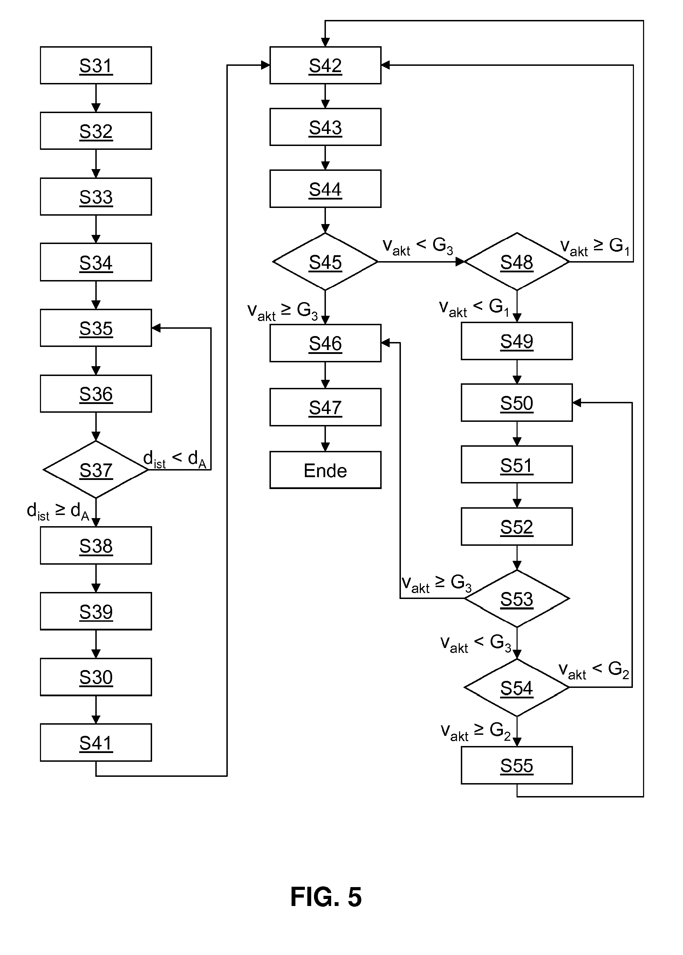

**FIG. 5** zeigt eine zweite Variante eines erfindungsgemäßen Verfahrens zur Steuerung eines Gerätesystems beim Erstellen einer Durchgangsbohrung in Form eines Ablaufdiagramms. Das Steuerungsverfahren wird anhand des in FIG. 1 gezeigten Gerätesystems 10 mit dem Kernbohrgerät 12 und der motorischen Vorschubeinrichtung 25 beschrieben. Mit Hilfe des Gerätesystems 10 wird die Durchgangsbohrung 52 in der Stahlbetondecke 53 der FIG. 3 erstellt.

Bei dem erfindungsgemäßen Steuerungsverfahren nach FIG. 5 werden Schritte **S31 bis S43** ausgeführt, die mit den Schritten S01 bis S13 des in FIG. 4 gezeigten Steuerungsverfahrens übereinstimmen. Die Kontrolleinheit 42 berechnet in einem Schritt **S44** aus den, in Schritt S43 übermittelten, Messwerten den aktuellen Bohrfortschritt vₐₖₜ und vergleicht in einem Schritt **S45** den aktuellen Bohrfortschritt vₐₖₜ mit dem voreingestellten, dritten Grenzwert G₃.

Überschreitet der aktuelle Bohrfortschritt vₐₖₜ den dritten Grenzwert G₃ (vₐₖₜ ≥ G₃ in S45), hat die Bohrkrone 14 die Unterseite 59 der Stahlbetondecke 53 erreicht. Die Kontrolleinheit 42 schaltet das Kernbohrgerät 12 und die motorische Vorschubeinrichtung 25 in einem Schritt **S46** in den Parkmodus um; in der Kontrolleinheit 42 sind passende Bearbeitungsparameter für den Parkmodus des Gerätesystems 10 gespeichert. Das Gerätesystem 10 wird in einem Schritt **S47** mit den eingestellten Bearbeitungsparametern für den Parkmodus betrieben, bis das Kernbohrgerät 12 die voreingestellte Parkposition erreicht hat. Nach Schritt S47 ist das erfindungsgemäße Verfahren beendet.

Unterschreitet der aktuelle Bohrfortschritt vₐₖₜ den dritten Grenzwert G₃ (vₐₖₜ < G₃ in S45), wird der aktuelle Bohrfortschritt vₐₖₜ von der Kontrolleinheit 42 in einem Schritt **S48** mit dem ersten Grenzwert G₁ verglichen. Wenn der aktuelle Bohrfortschritt vₐₖₜ den ersten Grenzwert G₁ nicht unterschreitet (vₐₖₜ ≥ G₁ in S48), wird das Gerätesystem 10 weiterhin in der Phase "Betonbohren" betrieben und das erfindungsgemäße Verfahren wird mit Schritt S42 fortgesetzt. Unterschreitet der aktuelle Bohrfortschritt vₐₖₜ den ersten Grenzwert G₁ (vₐₖₜ < G₁ in S48), wird das Gerätesystem 10 in einem Schritt **S49** in die Phase "Eisenbohren" umgeschaltet und das erfindungsgemäße Verfahren wird mit Schritten **S50** und **S51** fortgesetzt, die mit den Schritten S21 und S22 übereinstimmen.

Die Kontrolleinheit 42 berechnet in einem Schritt **S52** aus den, in Schritt S51 übermittelten, Messwerten den aktuellen Bohrfortschritt vₐₖₜ und vergleicht den aktuellen Bohrfortschritt vₐₖₜ in einem Schritt **S53** mit dem voreingestellten, dritten Grenzwert G₃. Überschreitet der aktuelle Bohrfortschritt vₐₖₜ den dritten Grenzwert G₃ (vₐₖₜ ≥ G₃ in S53), hat die Bohrkrone 14 die Unterseite 59 der Stahlbetondecke 53 erreicht. Das erfindungsgemäße Verfahren wird mit den Schritten S46 bis S47 fortgesetzt und nach Schritt S47 beendet.

Wenn der aktuelle Bohrfortschritt vₐₖₜ den dritten Grenzwert G₃ (vₐₖₜ < G₃ in S53) unterschreitet, wird der aktuelle Bohrfortschritt vₐₖₜ von der Kontrolleinheit 42 in einem Schritt **S54** mit dem zweiten Grenzwert G₂ verglichen. Unterschreitet der aktuelle Bohrfortschritt vₐₖₜ den zweiten Grenzwert G₂ (vₐₖₜ < G₂ in S54), wird das Gerätesystem 10 weiterhin in der Phase "Eisenbohren" betrieben und das Verfahren wird mit Schritt S50 fortgesetzt. Überschreitet der aktuelle Bohrfortschritt vₐₖₜ den zweiten Grenzwert G₂ (vₐₖₜ ≥ G₂ in S54), schaltet die Kontrolleinheit 42 das Gerätesystem 10 in einem Schritt **S55** aus der Phase "Eisenbohren" in die Phase "Betonbohren" um und das erfindungsgemäße Verfahren wird anschliessend mit Schritt S42 fortgesetzt.

In den Lookup-Tabellen der Kontrolleinheit 42 können neben den Bearbeitungsparametern für die drei Phasen "Anbohren", "Betonbohren" und "Eisenbohren" für jeden Bohrkronendurchmesser angepasste Regelungsparameter zur Regelung der Motorparameter in den Phasen "Betonbohren" und "Eisenbohren" hinterlegt sein. Während der Bearbeitung werden die aktuellen Motorparameter (Drehzahl, Drehmoment) des Bohrmotors 31 gemessen und an die Kontrolleinheit 42 der motorischen Vorschubeinrichtung 25 übermittelt. Die Kontrolleinheit 42 berechnet aus den übermittelten Messwerten eine Abweichung Δ zwischen den aktuellen Motorparametern (Ist-Werte) und den, in der Kontrolleinheit 42 gespeicherten, Motorparametern (Soll-Werte). Die berechnete Abweichung Δ wird mit einer voreingestellten, maximalen Abweichung Δₘₐₓ verglichen. Unterschreitet die Abweichung Δ die maximale Abweichung (Δ < Δₘₐₓ), bleiben die Motorparameter am Vorschubmotor 36 und am Bohrmotor 31 unverändert und der Vorschubmotor 36 wird mit den aktuellen Motorparametern betrieben. Überschreitet die Abweichung Δ die maximale Abweichung (Δ ≥ Δₘₐₓ), berechnet die Kontrolleinheit 42 angepasste Motorparameter für den Vorschubmotor 36 und den Bohrmotor 31 und stellt diese angepassten Motorparameter an den Motoren 36, 31 ein.

## Patentansprüche

1. Verfahren zur Steuerung eines Gerätesystems (10) mit einem Werkzeuggerät (12) und einer motorischen Vorschubeinrichtung (25) beim Bearbeiten eines Werkstückes (51) aus einem ersten Material (55, 57) und einem, vom ersten Material (55, 57) verschiedenen, zweiten Material (56), wobei:
■ das Werkstück (51) vom Gerätesystem (10) zunächst in einem ersten Betriebsmodus mit ersten Bearbeitungsparametern bearbeitet wird, die für das erste Material (55, 57) gespeichert sind,
■ nach Beginn der Bearbeitung des Werkstückes (51) im ersten Betriebsmodus ein erster Bearbeitungsfortschritt (v₁) des Werkzeuggerätes (12) gemessen und als Referenzwert (v_{ref}) gespeichert wird,
■ während der Bearbeitung des Werkstückes (51) im ersten Betriebsmodus regelmäßig ein aktueller Bearbeitungsfortschritt (vₐₖₜ) des Werkzeuggerätes (12) gemessen und mit einem ersten Grenzwert (G₁) verglichen wird.

2. Verfahren nach Anspruch 1, **dadurch gekennzeichnet, dass** das Werkstück (51) vom Gerätesystem (10) weiterhin im ersten Betriebsmodus bearbeitet wird, wenn der aktuelle Bearbeitungsfortschritt (vₐₖₜ) innerhalb des ersten Grenzwertes (G₁) liegt.

3. Verfahren nach Anspruch 1, **dadurch gekennzeichnet, dass** das Gerätesystem (10) aus dem ersten Betriebsmodus in einen zweiten Betriebsmodus umgeschaltet wird, wenn der aktuelle Bearbeitungsfortschritt (vₐₖₜ) außerhalb des ersten Grenzwertes (G₁) liegt, wobei das Werkstück (51) vom Gerätesystem (10) im zweiten Betriebsmodus mit zweiten Bearbeitungsparametern bearbeitet wird, die für das zweite Material (56) gespeichert sind.

4. Verfahren nach Anspruch 4, **dadurch gekennzeichnet, dass** während der Bearbeitung des Werkstückes (51) im zweiten Betriebsmodus regelmäßig der aktuelle Bearbeitungsfortschritt (vₐₖₜ) des Werkzeuggerätes (12) gemessen und mit einem zweiten Grenzwert (G₂) verglichen wird.

5. Verfahren nach Anspruch 4, **dadurch gekennzeichnet, dass** das Werkstück (51) vom Gerätesystem (10) weiterhin im zweiten Betriebsmodus bearbeitet wird, wenn der aktuelle Bearbeitungsfortschritt (vₐₖₜ) innerhalb des zweiten Grenzwertes (G₂) liegt.

6. Verfahren nach Anspruch 4, **dadurch gekennzeichnet, dass** das Gerätesystem (10) aus dem zweiten Betriebsmodus in den ersten Betriebsmodus umgeschaltet wird, wenn der aktuelle Bearbeitungsfortschritt (vₐₖₜ) außerhalb des zweiten Grenzwertes (G₂) liegt, wobei das Werkstück (51) vom Gerätesystem (10) im ersten Betriebsmodus mit den ersten Bearbeitungsparametern bearbeitet wird, die für das erste Material (55, 57) gespeichert sind.
